# FASCICULE DE BREVET EUROPEEN

(11) **EP 3 420 543 B1**
(45) Date de publication et mention de la délivrance du brevet: **20.12.2023**
(21) Numéro de dépôt: 17710605.1
(22) Date de dépôt: 23.02.2017
(51) Int. Cl.: G07F 9/02, G07F 13/10, G06Q 20/10, A47J 31/44, A47J 31/52, G07F 13/06

(54) **PROCEDE DE PROGRAMMATION DEPORTEE D'UN AFFICHEUR DE MACHINE A BOISSON**
VERFAHREN ZUR VERSETZTER PROGRAMMIERUNG EINER ANZEIGE EINER GETRÄNCKEMASCHINE
METHOD FOR OFFSET PROGRAMMING OF A DISPLAY OF A BEVERAGE MACHINE

(30) Priorité: 26.02.2016 FR 1651635
(43) Date de publication de la demande: 02.01.2019
(73) Titulaire: SEB S.A., 69130 Ecully (FR)
(72) Inventeur: BORDELET, Marylène, 72240 Neuvillalais (FR); DIDEROTTO, Sandrine, 21000 Dijon (FR); JOULAUD, Laurent, 53300 Saint Fraimbault de Prieres (FR)
(74) Mandataire: Germain Maureau
(86) Numéro de dépôt international: PCT/FR2017/050407
(87) Numéro de publication internationale: WO 2017/144825

(56) Documents cités:
- WO-A1-2011/067157
- US-A1- 2006 074 523
- US-A1- 2012 239 189
- US-A1- 2013 211 833
- US-A1- 2015 046 877
- US-A1- 2015 082 243

## Description

La présente invention concerne un procédé de programmation déportée d'un dispositif d'affichage d'une machine pour préparation de boissons. Plus particulièrement l'invention concerne une programmation qui s'effectue sans fil par un terminal de communication portable. L'invention concerne également un produit programme d'ordinateur, un terminal de communication.

Il est connu des machines pour préparation de boissons comme des machines à café qui comprennent un dispositif d'affichage sur lequel sont affichés des icônes ou des pictogrammes. Les icônes ou les pictogrammes représentent par exemple des tasses de café avec différentes contenances ce qui permet de choisir une quantité prédéfinie de café selon les préférences des différents utilisateurs.

Il existe également sur certaines machines plus élaborées, des icônes ou des pictogrammes qui représentent par exemple différentes sortes de café, tels des ristrettos, des espresso. Dans ce cas là, la machine à café permet de réaliser des cafés plus ou moins forts ou avec des gouts différents selon le dosage ou le type de café sélectionné. Les dispositifs d'affichage peuvent être des dalles à écran tactiles ou de simples écrans d'affichage avec un bouton sélectionneur qui est en général électro mécanique.

Le document WO2011067157 décrit une machine pour préparation de boisson qui comprend un dispositif d'affichage destiné à afficher un menu principal et une barre d'icônes pour l'affichage de différentes icônes. La barre d'icônes est positionnée sur le côté du menu principal. Cette machine comprend en outre une mémoire dans laquelle deux groupes d'icônes sont mémorisés. Le dispositif d'affichage comprend deux modes de fonctionnement et dans un premier mode de fonctionnement, un premier groupe d'icônes est affiché sur la barre d'icônes et dans un second mode de fonctionnement, c'est un second groupe d'icônes qui est affiché sur la barre d'icônes. Le premier ou le second groupe d'icônes peut être sélectionné via un pavé tactile qui est par exemple conçu pour accepter une opération tactile de commutation entre les premier et second modes de fonctionnement.

Un des inconvénients rencontrés avec ce dispositif d'affichage réside dans le fait que les différents groupes d'icônes qui peuvent être affichés sont préalablement mis en mémoire lors de la fabrication de la machine ce qui fait que la personnalisation des groupes d'icônes ne peut pas se faire avec ce dispositif d'affichage. Ainsi la programmation d'un tel dispositif d'affichage par un utilisateur n'est pas envisageable ce qui réduit les possibilités d'affichage des préférences d'un utilisateur.

Si le nombre de groupes d'icônes est important, cela nécessite d'adapter au moins la capacité de la mémoire de stockage de la machine, augmentant ainsi la complexité et le prix de revient de la machine. Néanmoins le problème reste le même et les différents écrans d'accueil ne sont pas programmables ce qui augmente le temps pour, par exemple, sélectionner son café.

En outre, le passage d'un groupe d'icônes à un autre se fait uniquement avec l'aide d'un pavé tactile ce qui augmente également le prix, la durée et la complexité de fabrication d'une machine de ce type.

La présente invention vise à résoudre tout ou partie des inconvénients mentionnés ci-dessus et permet de proposer une programmation d'un afficheur de machine pour préparation de boissons qui soit dynamique et qui soit simple de construction en même temps que simple d'utilisation pour un utilisateur.

A cet effet, la présente invention concerne un procédé de programmation déportée d'un dispositif d'affichage de machine selon la revendication 1
Dans le cadre de l'invention, l'entité de commande est apte à programmer le dispositif d'affichage de la machine pour préparation de boissons.

Toujours dans le cadre de l'invention, la donnée de codage est relative à au moins une icône qui est affichée sur le dispositif d'affichage du terminal de communication. Cette ou ces données de codage sont adaptées à être exploitées ou lues par l'entité de commande.

L'intérêt d'un tel procédé de programmation est donc de simplifier techniquement le dispositif d'affichage de la machine pour préparation de boissons tout en améliorant et en augmentant les capacités d'affichage et de personnalisation de la machine pour préparation de boissons par l'envoi d'une instruction de programmation élaborée indépendamment de la machine. En outre un tel procédé de programmation permet une programmation à distance du dispositif d'affichage de la machine à café.

Par exemple, une donnée de codage d'une icône comprise dans l'instruction de programmation et envoyée à l'entité de commande peut correspondre à n'importe quel type de café que l'on peut trouver par exemple sur une application affichée sur le dispositif d'affichage du terminal de communication.

Selon un aspect de l'invention, l'étape (E3) de programmation par l'entité de commande du dispositif d'affichage comprend la substitution d'au moins une icône précédemment affichée sur le dispositif d'affichage de la machine pour préparation de boissons par l'au moins une icône issue de l'au moins une instruction de programmation élaborée sur le dispositif d'affichage du terminal de communication.

Cette disposition permet de conserver un affichage auquel l'utilisateur est familiarisé.

Selon un aspect de l'invention, l'étape (E3) de programmation par l'entité de commande du dispositif d'affichage comprend au moins une des étapes suivantes :
- (E3') programmation par l'entité de commande d'au moins deux matrices graphiques sur le dispositif d'affichage de manière à pouvoir afficher plusieurs icônes sur le dispositif d'affichage et
- (E3") allocation dynamique par l'entité de commande d'une matrice graphique à chaque icône et
- (E3'") association par l'entité de commande d'au moins une instruction de commande d'au moins un élément fonctionnel de la machine pour préparation de boissons, ladite instruction de commande étant associée à une matrice graphique et à une donnée de codage.

Le procédé de programmation du dispositif d'affichage de la machine pour préparation de boissons permet d'obtenir, outre les effets obtenus ci-dessus, un affichage de plusieurs icônes sur le dispositif d'affichage de la machine pour préparation de boissons. Par exemple plusieurs icônes représentant des quantités de café différentes ou des types de café différents peuvent être affichés sur le dispositif d'affichage au niveau de chaque zone graphique de visualisation. L'intérêt de ce procédé est également qu'une fois les icônes affichées, la commande de la machine est réalisable par l'intermédiaire de ces icônes, par exemple on peut avoir quatre zones graphiques de visualisation et ainsi avoir quatre types d'icônes représentant quatre cafés différents sur le dispositif d'affichage de la machine. Ainsi la machine à café peut préparer quatre types de café différents par une action sur le dispositif d'affichage. De cette manière le dispositif d'affichage est modulable et est allégé par rapport à l'art antérieur.

Selon un aspect de l'invention, le procédé de programmation déportée comprend une étape (Es) de synchronisation du terminal de communication avec l'entité de commande au cours de laquelle le terminal de communication s'appaire avec l'entité de commande.

De cette manière seuls les terminaux de communication synchronisés peuvent envoyer des informations à la machine de préparation de boisson. Cela permet de sécuriser les échanges de données codées entre les différents dispositifs appairés.

Selon un aspect de l'invention, l'étape (E1) d'élaboration de l'instruction de programmation comprend une sous étape dans laquelle l'unité de traitement électronique est adaptée à programmer le dispositif d'affichage du terminal de communication de manière à avoir :
- Au moins une zone graphique de visualisation d'au moins une icône associée à au moins une instruction d'affichage de l'icône dans ladite zone graphique de visualisation et
- une zone graphique d'acquisition qui est prévue pour élaborer l'instruction de programmation à partir d'au moins une icône transférée de la zone graphique de visualisation vers ladite zone graphique d'acquisition du terminal de communication, le transfert de l'icône entre les zones s'effectue par :
   ▪ un appui continu sur ladite icône combiné à une translation de ladite icône de la zone graphique de visualisation vers la zone graphique d'acquisition et un relâchement de l'appui lorsque ladite icône est située dans la zone graphique d'acquisition ou
   ▪ par au moins un appui ponctuel sur ladite icône de la zone graphique de visualisation.

Le procédé de programmation du dispositif d'affichage de la machine pour préparation de boissons permet ainsi de définir une instruction de programmation qui comprenne une ou plusieurs données de codage d'une ou plusieurs icônes et ceci de manière simple, c'est-à-dire en manipulant lesdites icônes uniquement sur le dispositif d'affichage du terminal de communication.

On s'affranchit ainsi d'un traitement logiciel important dans la machine à café. Un autre intérêt est de pouvoir réaliser cette programmation de l'instruction de programmation à distance de la machine à café. Cette instruction de programmation pouvant être stockée dans le terminal de communication jusqu'à ce que celle-ci soit transférée à la machine à café. Le transfert s'effectuant soit par une action de l'utilisateur soit lors de la synchronisation évoquée ci-dessus.

Selon un aspect de l'invention, le protocole de communication est du WIFI ou du Bluetooth^{®} ou de la radiofréquence. De cette manière la communication entre les différents appareils se fait sans fil et à distance.

La présente invention concerne en outre un produit programme d'ordinateur qui comprend des instructions de code agencées pour mettre en oeuvre les étapes d'un procédé tel que décrit ci-dessus. Dans le cadre de l'invention le produit programme est exécuté sur l'unité de traitement électronique d'un terminal, notamment un terminal de communication portable.

La présente invention concerne également un terminal de communication portable comprenant une unité de traitement électronique ayant en mémoire les instructions de code d'un produit programme d'ordinateur décrit ci-dessus et agencée pour exécuter un tel produit programme d'ordinateur.

La description concerne aussi un procédé de programmation interne à une machine pour préparation de boissons, ladite machine pour préparation de boissons comprend une entité de commande agencée pour recevoir une instruction de programmation selon un protocole de communication, un dispositif d'affichage et au moins un élément fonctionnel apte à être commandé par l'entité de commande, le procédé de programmation interne comprend les étapes suivantes :
- (P1) réception par l'entité de commande d'une instruction de programmation en provenance d'un terminal de communication, ladite instruction de programmation comprenant au moins une donnée de codage d'au moins une icône,
- (P2) programmation, par l'entité de commande, du dispositif d'affichage de la machine avec ladite instruction de programmation reçue.

L'intérêt d'un tel procédé est donc de programmer le dispositif d'affichage avec des données reçues d'un autre dispositif et cela en utilisant simplement les capacités de traitement informatique de l'entité de commande qui est déjà présente dans les machines de l'art antérieur. Si les capacités de traitement informatique de l'entité de commande ne sont pas suffisantes, une simple mise à niveau du logiciel de l'entité de commande permet de réaliser le procédé évoqué ci-dessus ce qui permet de maitriser les couts de la fabrication d'une telle machine.

Selon un aspect de l'invention, le protocole de communication est du WIFI ou du Bluetooth^{®} ou de la radiofréquence.

La description concerne également un produit programme d'ordinateur comprenant des instructions de code agencées pour mettre en oeuvre les étapes d'un procédé lorsque ledit programme est exécuté sur une entité de commande d'une machine pour préparation de boissons.

La description concerne en outre une machine pour préparation de boissons comprenant une entité de commande ayant en mémoire les instructions de code d'un produit programme d'ordinateur tel que décrit précédemment et agencée pour exécuter un tel produit programme d'ordinateur.

L'invention sera mieux comprise à l'aide de la description qui suit en référence aux dessins schématiques annexés représentant, à titre d'exemple non limitatif, une forme d'exécution de ce procédé de programmation et dans laquelle :
- la Figure 1 est un schéma d'un système mettant en oeuvre un procédé de programmation ;
- la Figure 2 est un ordinogramme présentant les étapes d'un procédé de programmation déportée d'un dispositif d'affichage d'une machine de préparation de boisson ;
- la Figure 3 est un ordinogramme présentant les étapes d'un procédé de programmation déportée d'un dispositif d'affichage d'une machine de préparation de boisson ;
- la Figure 4 est un ordinogramme présentant des sous étapes du procédé de programmation de la figure 2 ;
- les Figures 5a) à 5d) représentent les étapes d'élaboration d'une instruction de programmation ;
- les Figures 6a) à 6b) représentent les étapes de la transmission de l'instruction de programmation des figures 5a) à 5d).

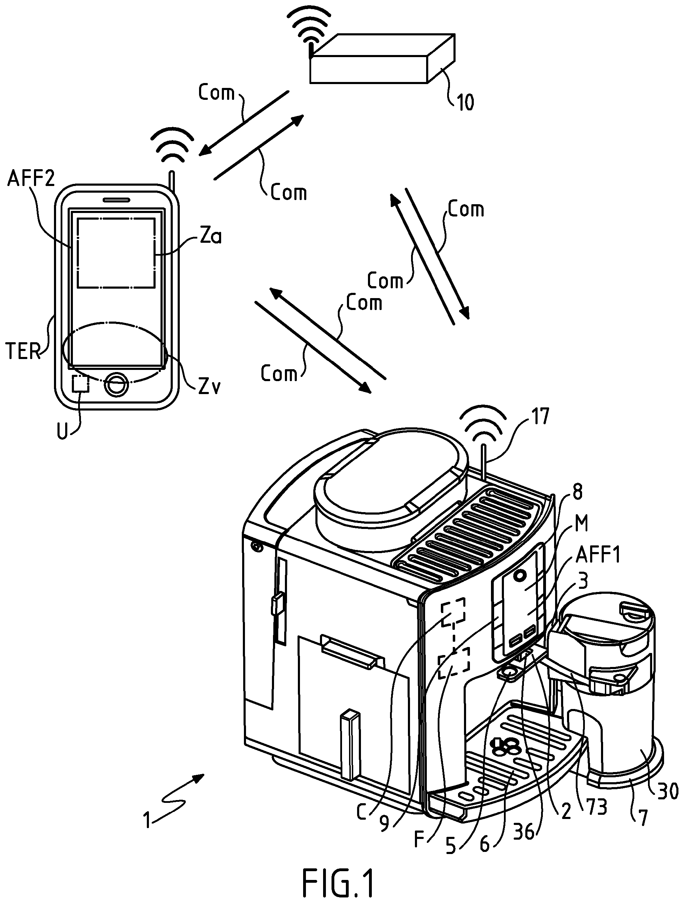

Comme illustré à la figure 1, un système qui est conforme à l'invention comprend différents éléments. Ce système comprend une machine 1 pour préparation de boissons. Cette machine 1 pour préparation de boissons peut être destinée à la préparation de boissons comme du thé, du café, ou même des boissons à base de lait. Dans la suite de la description la machine 1 pour préparation de boissons sera simplement appelée machine 1 pour faciliter la lecture. Dans l'exemple de réalisation représenté à la figure 1, la machine 1 comprend un dispositif 30 de production d'une boisson à partir de lait qui est accouplée à un embout de buse de sortie vapeur 2. La machine 1 comporte une chaudière (non illustrée sur les figures) permettant de produire de l'eau chaude et/ou de la vapeur pour alimenter l'embout de buse de sortie vapeur 2. La machine 1 comporte un conduit vapeur 3 articulé, qui s'étend vers l'extérieur de la machine à café 1 et se termine par l'embout de buse de sortie vapeur 2. La machine 1 comporte une chambre d'infusion (non illustrée sur les figures) alimentée en eau chaude pour préparer une boisson qui est distribuée par une buse de sortie café 5 agencée au-dessus d'un repose-tasse 6 recevant un récipient (non illustré sur les figures).

La machine 1 peut être à la base une machine à café comportant une buse de moussage et de réchauffage de lait amovible telle que décrite dans la demande de brevet EP2606783. La buse de moussage et de réchauffage est détachée de l'embout de buse de sortie vapeur 2 et le dispositif 30 de production d'une boisson à partir de lait, notamment de lait chauffé et moussé, est accouplé en lieu et place à l'embout de buse de sortie vapeur 2. Le dispositif 30 comporte un conduit de distribution 73 du lait chauffé et moussé comprenant une extrémité 36 libre. L'extrémité 36 par laquelle s'écoule le lait chauffé et moussé est agencée au voisinage de la buse de sortie café 5 de manière détachable et permet de réaliser notamment un cappuccino. La machine à café 1 peut comporter une base de réception 7 du dispositif 30 agencé à coté du repose-tasse 6. La machine 1 comporte un tableau de commande 8 comportant notamment au moins un bouton de commande 9. Ce bouton de commande 9 peut notamment être dédié à la commande pour un cycle de production de vapeur et/ou de distribution d'un cappuccino et/ou un enchainement d'un cycle de distribution de lait chaud moussé et/ou encore d'un cycle de distribution d'un café. Bien entendu d'autres commandes sont possibles.

Dans une autre variante, non représentée, la machine 1 est une machine à café simple et ne comprend pas de dispositif 30 de production d'une boisson à partir de lait.

La suite de la description s'entend aussi bien pour une machine 1 qui comprend un dispositif 30 de production d'une boisson à partir de lait qu'une machine 1 qui n'en comprend pas.

Dans tous les cas, la machine 1 comprend également un dispositif (AFF1) d'affichage autrement appelé afficheur. Dans le cadre de l'invention, celui-ci est un écran à cristaux liquides. Celui-ci peut être un écran à cristaux liquides monochrome ou un écran à cristaux liquides couleur composé d'une matrice de pixels.

Dans le cadre de l'invention le dispositif (AFF1) d'affichage est à « matrice active » notamment du TFT (Thin-film transistor) c'est-à-dire qu'il comprend en face avant une seule électrode en ITO (oxyde d'indium-étain InSn2O3), et comprend en face arrière une matrice de transistors en film mince. L'avantage d'une telle technologie permet de mieux contrôler le maintien de tension de chaque pixel, pour améliorer le temps de réponse et la stabilité de l'affichage.

Dans des variantes de réalisation du dispositif (AFF1) d'affichage, celui-ci utilise une technologie à matrice passive d'écran, comme la technologie de base, le TN (Twisted Nematic) qui permet d'apporter une solution économique, ou la technologie DSTN (Dual scan twisted nematic) qui permet d'obtenir une stabilité de l'image grâce à un double balayage.

Dans d'autres variantes du dispositif (AFF1) d'affichage, non représentées, ce dispositif (AFF1) d'affichage peut également être un afficheur fluorescent qui émet une lumière très intense, présente un contraste élevé, et peut comporter des éléments de couleurs différentes.

Enfin dans d'autres variantes encore, le dispositif (AFF1) d'affichage peut être un afficheur à 14 ou 16 segments qui permet d'afficher les caractères alphanumériques.

D'autres variantes sont également possibles comme des écrans électroluminescents ou OLED (Organic light-emitting diode) qui comprennent des diodes électroluminescentes organiques.

Toutes ces variantes de dispositif (AFF1) d'affichage sont compatibles avec le procédé de programmation déportée qui sera décrit par la suite.

En outre le dispositif (AFF1) d'affichage permet au moins un affichage d'une ou plusieurs icônes (IC) ou pictogrammes. De même le dispositif (AFF1) d'affichage peut être un afficheur tactile.

La machine 1 comprend également une entité C de commande. Celle-ci peut être une carte électronique comprenant de manière non limitative un processeur, un microprocesseur, une mémoire de manière à stocker des instructions de code d'un produit programme d'ordinateur.

Cette entité C de commande peut recevoir des instructions de dispositifs distants. A cet effet l'entité C de commande intègre (ou est reliée) à un module 17 de communication, telle qu'une antenne, qui peut recevoir et émettre des informations à distance.

La communication d'informations se fait selon un protocole de communication (com) particulier. Ce protocole de communication (com) peut être du WIFI ou du Bluetooth^{®} ou encore de la radiofréquence.

Enfin la machine 1 comprend des éléments F fonctionnels qui sont des éléments tels qu'un moteur, une pompe hydro bar, un interrupteur, un minuteur ou encore un broyeur...

Ces éléments sont reliés et pilotés par l'entité (C) de commande.

Le système représenté à la figure 1 comprend également un terminal (TER) de communication. Le terminal (TER) de communication comprend un dispositif (AFF2) d'affichage et une unité U de traitement électronique. Celle-ci peut être une carte électronique comprenant de manière non limitative un processeur, un microprocesseur, une mémoire de manière à stocker des instructions de code d'un produit programme d'ordinateur.

Le dispositif (AFF2) d'affichage est un écran qui peut afficher une ou plusieurs icônes (IC). Il peut être tactile et dans ce cas là il peut recevoir des instructions de commande par un appui sur une des icônes (IC) dudit dispositif (AFF2) d'affichage.

Ce terminal (TER) de communication peut en outre échanger des informations avec la machine 1 selon un protocole de communication (com) qui peut être du WIFI ou du Bluetooth^{®} ou encore de la radiofréquence. Les informations échangées peuvent l'être dans les deux sens de communication.

Classiquement le terminal (TER) de communication peut être un téléphone, un Smartphone, un ordinateur de poche, un ordinateur classique ou une tablette électronique.

Que ce soit la machine 1 ou le terminal (TER) de communication, ces deux éléments peuvent également communiquer avec un serveur 10 distant, toujours selon un protocole de communication (com) qui peut également être du WIFI ou du Bluetooth^{®} ou encore de la radiofréquence. De la même manière, les différentes informations échangées peuvent l'être dans les deux sens de communication.

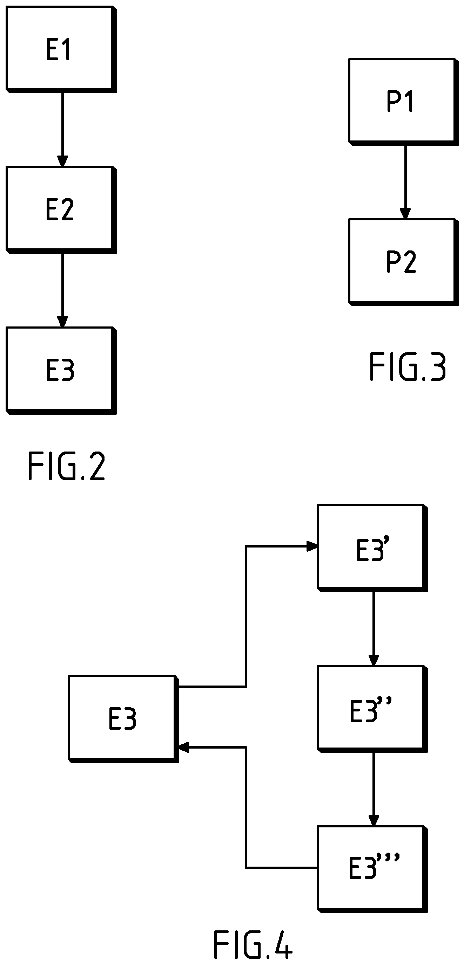

Le système décrit ci-dessus est adapté à mettre en oeuvre un procédé de programmation déportée qui est également un objet de l'invention. Comme visible à la figure 2, ce procédé comprend trois étapes (E1, E2, E3).

La première étape, (E1), consiste tout d'abord à élaborer sur le dispositif (AFF2) d'affichage du terminal (TER) de communication une instruction de programmation (InsP).

Cette instruction de programmation (InsP) comprend une ou plusieurs données (D) de codage de la ou des icônes affichées sur ledit dispositif (AFF2) d'affichage.

Plus particulièrement l'instruction de programmation (InsP) comprend des trames de données (D) de codage.

Ces trames permettent d'envoyer et de recevoir des commandes et des informations entre la machine 1 et le terminal (TER) de communication. Comme la communication est bidirectionnelle, par la suite, l'initiateur de l'échange sera appelé l'émetteur et l'autre sera appelé le récepteur.

Les trames échangées entre l'émetteur et le récepteur sont codées sur plusieurs octets et dans le cadre de l'invention elles se présentent de la manière suivante:

| **Octet 1** | **Octet 2** | **Octet 3** | **Octet 4** | | **Octet 2+n** | **Octet 3+n** | **Octet 4+n** |
|---|---|---|---|---|---|---|---|
| TYPE D'ENVOI | NOMBRE D'OCTETS | COMMANDE | DATA 1 | ... | DATA N | CRC H | CRC L |

Cette trame comprend les différentes informations suivantes dont la première est TYPE D'ENVOI, codée sur 1 octet, et qui sert à spécifier l'émetteur ou le récepteur de la trame envoyée.

Par exemple la valeur est 0 pour tous les échanges entre la machine 1 et le terminal (TER) de communication.

Elle comprend également une information NOMBRE D'OCTETS, codée sur 1 octet et qui spécifie le nombre de datas envoyées. Le nombre d'octet varie de 1 à 16.

Elle comprend également l'information DATA, codée sur n octets qui est une donnée utile qui dépend de l'émetteur ou du récepteur des trames.

Elle comprend aussi l'information CRC, codée sur 2 octets, qui permet de vérifier l'intégrité des trames envoyées.

Toujours en référence à la figure 2, le procédé de programmation déportée comprend une seconde étape, (E2), qui consiste à ce que le terminal (TER) de communication envoi l'instruction de programmation (InsP). Cette instruction de programmation (InsP) est envoyée selon le protocole de communication (com) à l'entité C de commande. Cet envoi est soit automatique, soit déclenché par un utilisateur comme cela sera décrit par la suite.

Le procédé de programmation déportée comprend également une troisième étape, (E3), dans laquelle l'entité C de commande va programmer le dispositif (AFF1) d'affichage de la machine 1. Cette programmation se fait en fonction de la ou des données D de codage contenues dans l'instruction de programmation (InsP).

Cela va permettre de définir un écran d'accueil spécifique sur le dispositif (AFF1) d'affichage de manière à afficher des icônes / pictogrammes qui sont les préférences d'un utilisateur.

Comme visible à la figure 3, l'invention comprend également un procédé de programmation interne à la machine 1.

Dans ce procédé de programmation interne qui comprend deux étapes P1 et P2, l'entité C de commande de la machine 1 réceptionne, dans la première étape P1, l'instruction de programmation (InsP) en provenance du terminal (TER) de communication et dans laquelle sont comprises les donnée D de codage d'au moins une icône, et dans la seconde étape P2, programme le dispositif d'affichage (AFF1) de la machine 1 avec ladite instruction de programmation (InsP) reçue et notamment avec les dites données D reçues.

En référence maintenant à la figure 1 et à la figure 4, qui est un ordinogramme présentant un sous procédé du procédé de programmation de la figure 2, et plus particulièrement de l'étape (E3) de programmation par l'entité C de commande du dispositif (AFF1) d'affichage, ce sous procédé comprend trois étapes (E3', E3" et E3‴). Une fois que l'entité C de commande du dispositif (AFF1) d'affichage a reçu l'instruction de programmation (InsP) en provenance du terminal (TER) de communication, une première étape (E3') de programmation est effectuée par l'entité C de commande. Dans cette étape (E3') de programmation, l'entité C de commande programme au moins deux matrices graphiques M sur le dispositif (AFF1) d'affichage. Ces matrices graphiques correspondent à différentes zones sur le dispositif (AFF1) d'affichage. De cette manière le dispositif (AFF1) d'affichage pourra afficher plusieurs icônes/pictogrammes. Dans le cadre de l'invention ce nombre est égal à quatre matrices graphiques. Lors de la seconde étape, (E3"), l'entité C de commande alloue de manière dynamique et en fonction de la trame et des données D contenues dans l'instruction de programmation (InsP), une matrice graphique à chaque icône/pictogramme reçues et affiche la ou les icônes sur les matrices graphiques dédiées. Par exemple et dans le cadre de l'invention, l'entité C de commande définit quatre matrices graphiques sur le dispositif (AFF1) d'affichage et si l'instruction de programmation (InsP) comprend des données D relatives à trois icônes, l'entité C de commande associera donc trois matrices aux trois icônes. La dernière matrice graphique étant dans ce cas précis laissée libre. Cette étape (E3") comprend également l'affichage des icônes sur les matrices graphiques associées. L'association est ensuite suivie par l'étape (E3'") dans laquelle l'entité C de commande associe à chaque matrice graphique M (et donc à chaque icône affichée sur la matrice dédiée) une instruction de commande (InsC). Il peut y avoir plusieurs instructions de commande (InsC) associées à chaque matrice. Cette instruction de commande contient des instructions pour piloter un élément fonctionnel F en fonction des données D associées à chaque matrice graphique.

Ainsi une matrice graphique affichant un café aura pour instruction de commander les éléments F fonctionnels nécessaires à la préparation d'un café.

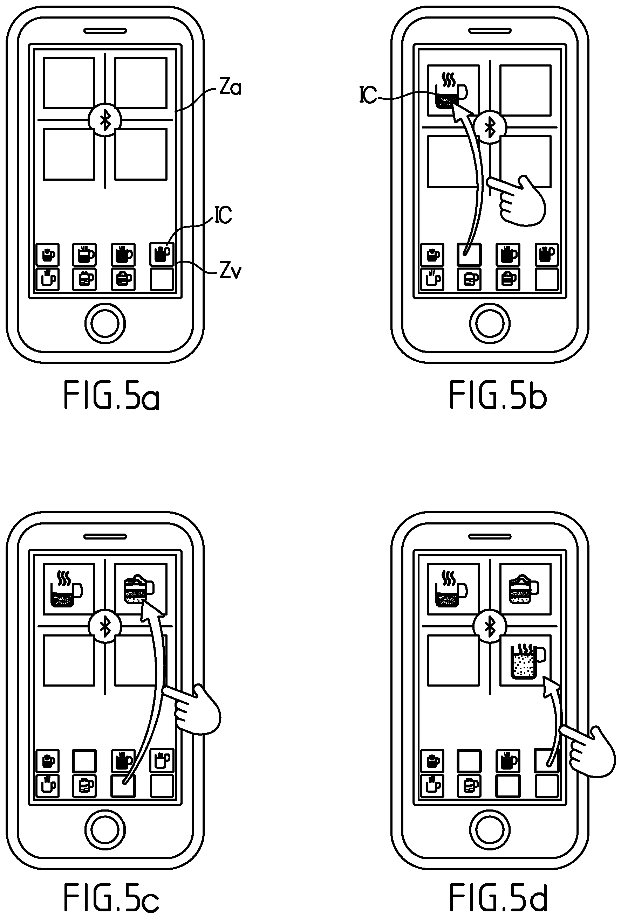

En référence maintenant aux figures 1 et 5a) à 5d), qui illustrent l'étape (E1) d'élaboration de l'instruction de programmation (InsP), celle-ci comprend une sous étape dans laquelle l'unité U de traitement électronique programme le dispositif (AFF2) d'affichage du terminal (TER) de communication. Dans cette étape de programmation, l'unité U de traitement électronique programme une zone graphique de visualisation Zv. Cette zone graphique de visualisation Zv permet d'afficher différentes icônes (IC) relatives à différents types de boissons ou relatives à différents paramètres ou préférences d'un utilisateur. Par une instruction d'affichage, l'unité U de traitement électronique, affiche différentes icônes (IC) dans la zone graphique de visualisation Zv. A chaque icône affichée dans la zone graphique de visualisation Zv correspond des données D de programmation. En plus de la zone graphique de visualisation Zv, l'unité U de traitement électronique programme également une zone graphique d'acquisition Za qui se trouve sur le dispositif (AFF2) d'affichage. Cette zone graphique d'acquisition Za est prévue pour élaborer l'instruction de programmation (InsP) à partir d'au moins une icône transférée de la zone graphique de visualisation Zv vers ladite zone graphique d'acquisition Za.

Il existe plusieurs modes de transfert d'une icône d'une zone vers une autre. Un premier mode consiste à utiliser le « drag and drop » c'est-à-dire que le transfert de l'icône entre les zones s'effectue par un appui continu sur ladite icône combiné à une translation de ladite icône/pictogramme de la zone graphique de visualisation vers la zone graphique d'acquisition et un relâchement de l'appui lorsque ladite icône est située dans la zone graphique d'acquisition.

Un autre mode de transfert consiste à effectuer au moins un appui ponctuel sur ladite icône / pictogramme de la zone graphique de visualisation ce qui aura pour effet de la transférer d'une zone à l'autre sans la faire glisser.

Les figures 5a) à 5d) illustrent l'élaboration de l'instruction de programmation (InsP) en utilisant le premier mode de transfert qui est le transfert par translation. Ainsi l'unité U de traitement électronique programme les deux zones graphiques de visualisation Zv et d'acquisition Za sur le dispositif (AFF2) d'affichage du terminal (TER) de communication comme cela est visible à la figure 5a. Dans le cadre de l'invention, la zone d'acquisition Za peut contenir quatre emplacements. La figure 5b représente un premier transfert d'une icône de la zone de visualisation Zv vers la zone d'acquisition Za. Ainsi un premier emplacement de la zone d'acquisition Za est occupé par une icône choisie par un utilisateur. Les étapes 5c et 5d représentent également des étapes de transfert d'icônes de manière à avoir les icônes dédiées par un utilisateur dans la zone d'acquisition Za. Dans cet exemple, seules trois icônes ont été transférées ce qui signifie que l'instruction de programmation (InsP) comprendra des données relatives à trois icônes simplement.

L'élaboration de l'instruction de programmation (InsP) peut se faire sans qu'une communication entre la machine 1 et le terminal (TER) soit effective.

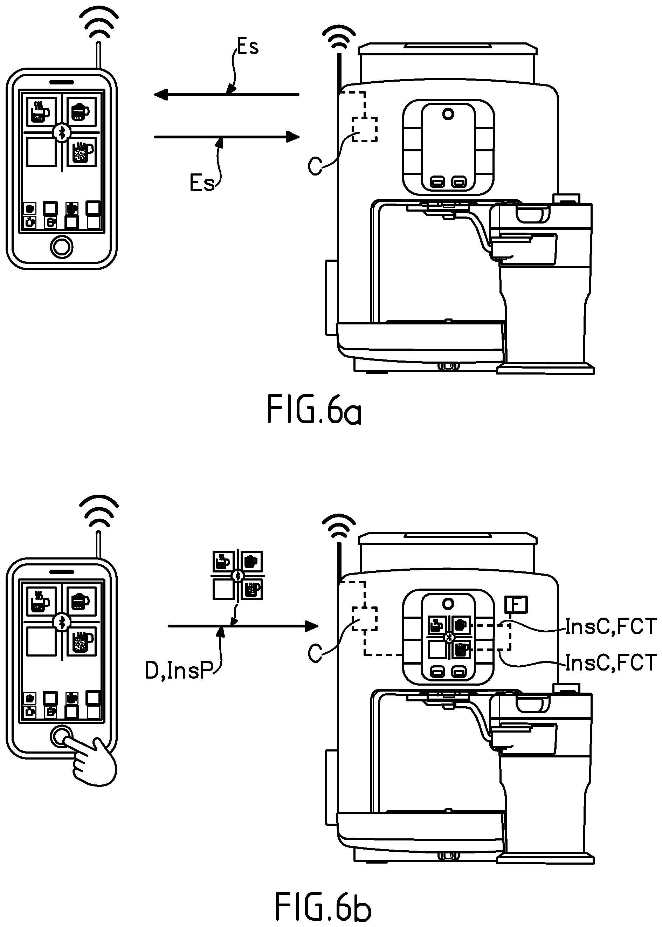

Il s'ensuit une transmission de l'instruction de programmation comme visible aux étapes des figures 6a) à 6b).

Afin de transmettre cette instruction de programmation (InsP) à la machine 1, une communication entre les éléments doit s'opérer ce qui fait qu'au préalable une étape (Es) de synchronisation doit s'opérer, comme visible à la figure 6a. Au cours de cette étape le terminal (TER) de communication s'appaire avec la machine 1 et plus particulièrement avec l'entité (C) de commande de la machine 1.

Durant cette étape, on peut également avoir la machine 1 qui informe le terminal sur le statut de programmation du dispositif (AFF1) d'affichage 1 et notamment l'organisation des écrans d'accueil.

L'utilisateur peut alors choisir de conserver les paramètres déjà enregistrés dans le dispositif (AFF1) d'affichage ou alors, comme visible à la figure 6b, il peut choisir de reprogrammer le dispositif (AFF1) d'affichage par l'envoi de l'instruction de programmation (InsP) à partir du terminal (TER).

Dans le cadre des étapes visibles aux figures 6a) et 6b), et comme décrit par ailleurs, l'instruction de programmation (InsP) est envoyée sous forme d'une ou plusieurs trames.

Cette trame, dans le second cas est construite comme cela a été décrit précédemment et comprend les informations suivantes :

| **octet1** | **octet2** | **octet3** | **octet4** | **octet5** | **octet6** | **octet7** | **octet8** | **octet9** | **octet10** | **octet11** | **octet12** | **octet13** |
|---|---|---|---|---|---|---|---|---|---|---|---|---|
| 0 | 9 | 4 | FCT1 / FCT2 | FCT3 / FCT4 | FCT1 / FCT2 | FCT3 / FCT4 | FCT1 / FCT2 | FCT3 / FCT4 | FCT1 / FCT2 | FCT3 / FCT4 | CRC_H | CRC_L |
| | | | Ecrans 1 | | Ecrans 2 | | Ecrans 3 | | Ecrans 4 | | | |

Les fonctions FCT codées, FCT 1 à FCT 4, et suivantes représentes les différentes fonctions qui sont codées à travers les icônes et auxquelles une instruction de commande (InsC, InsC1) est associée et qui vont permettre de piloter les éléments fonctionnels de la machine 1.

Une liste non exhaustive des différentes fonctions FCT est donnée ci-dessous :

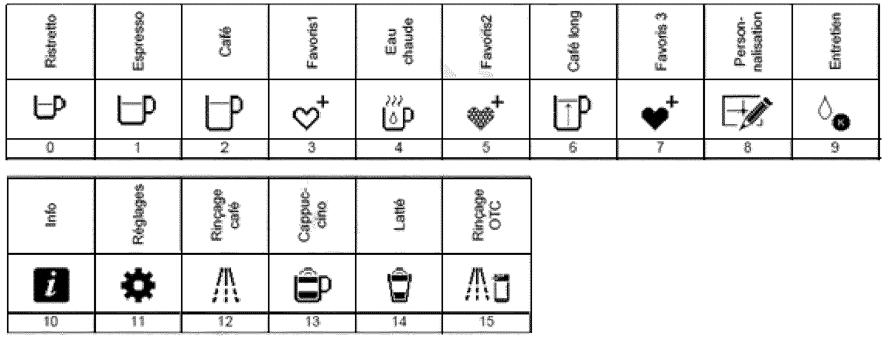

On peut y trouver aussi bien différents types de café que différents types de préférence d'utilisation ou encore des informations de maintenance.

## Revendications

1. Procédé de programmation déportée d'un dispositif (AFF1) d'affichage de machine (1) pour préparation de boissons par un terminal (TER) de communication, ledit terminal (TER) de communication comprenant au moins un dispositif (AFF2) d'affichage et une unité (U) de traitement électronique, ladite machine (1) pour préparation de boissons comprenant au moins une entité (C) de commande agencée pour recevoir au moins une instruction de programmation (InsP) selon un protocole de communication (com), le procédé de programmation déportée comprenant les étapes suivantes :
- (E1) élaboration sur le dispositif (AFF2) d'affichage du terminal (TER) de communication d'au moins une instruction de programmation (InsP), ladite élaboration comprenant une sous-étape dans laquelle l'unité (U) de traitement électronique programme le dispositif (AFF2) d'affichage du terminal (TER) de communication, et ladite instruction de programmation (InsP) comprenant au moins une donnée (D) de codage d'au moins une icône (IC) affichée sur ledit dispositif (AFF2) d'affichage, et
- (Es) synchronisation du terminal (TER) de communication avec l'entité (C) de commande au cours de laquelle le terminal (TER) de communication s'appaire avec l'entité (C) de commande et la machine (1) informe le terminal sur un statut de programmation du dispositif (AFF1) d'affichage et une organisation des écrans d'accueil ;
- choix par un utilisateur de conserver les paramètres déjà enregistrés dans le dispositif (AFF1) d'affichage ou de reprogrammer le dispositif (AFF1) d'affichage au moyen de l'instruction de programmation (InsP) par :
- (E2) envoi de ladite instruction de programmation (InsP) par le terminal (TER) de communication, selon le protocole de communication (com), à l'entité (C) de commande et par :
- (E3) programmation, par l'entité (C) de commande, du dispositif (AFF1) d'affichage de la machine (1) pour préparation de boissons, avec la donnée (D) de codage contenue dans l'instruction de programmation (InsP) de manière à au moins afficher l'icône sur ledit dispositif (AFF1) d'affichage.

2. Procédé de programmation déportée d'un dispositif (AFF1) d'affichage de machine (1) pour préparation de boissons selon la revendication 1, dans lequel l'étape (E3) de programmation par l'entité (C) de commande du dispositif (AFF1) d'affichage comprend la substitution d'au moins une icône précédemment affichée sur le dispositif d'affichage (AFF1) de la machine (1) pour préparation de boissons par l'au moins une icône (IC) issue de l'au moins une instruction de programmation (InsP) élaborée sur le dispositif d'affichage (AFF2) du terminal (TER) de communication.

3. Procédé de programmation déportée d'un dispositif (AFF1) d'affichage de machine (1) pour préparation de boissons selon l'une des revendications 1 ou 2, **caractérisé en ce que** l'étape (E3) de programmation par l'entité (C) de commande du dispositif (AFF1) d'affichage comprend au moins une des étapes suivantes :
- (E3') programmation par l'entité (C) de commande d'au moins deux matrices graphiques (M) sur le dispositif (AFF1) d'affichage de manière à pouvoir afficher plusieurs icônes sur le dispositif (AFF1) d'affichage et
- (E3") allocation dynamique par l'entité (C) de commande d'une matrice graphique à chaque icône et
- (E3'") association par l'entité (C) de commande d'au moins une instruction de commande (InsC) d'au moins un élément fonctionnel (F) de la machine (1) pour préparation de boissons, ladite instruction de commande (InsC) étant associée à une matrice graphique (M) et à une donnée (D) de codage.

4. Procédé de programmation déportée d'un dispositif d'affichage (AFF1) d'une machine (1) pour préparation de boissons selon l'une des revendications 1 à 3, **caractérisé en ce que** l'étape (E1) d'élaboration de l'instruction de programmation (InsP) comprend une sous étape dans laquelle l'unité (U) de traitement électronique est adaptée à programmer le dispositif (AFF2) d'affichage du terminal (TER) de communication de manière à avoir :
- Au moins une zone graphique de visualisation (Zv) d'au moins une icône associée à au moins une instruction d'affichage de l'icône dans ladite zone graphique de visualisation, chaque icône affichée dans la zone graphique de visualisation (Zv) correspondant à des données (D) de codage, et
- Une zone graphique d'acquisition (Za) qui est prévue pour élaborer l'instruction de programmation (InsP) à partir d'au moins une icône transférée de la zone graphique de visualisation vers ladite zone graphique d'acquisition du terminal de communication, le transfert de l'icône entre les zones s'effectue par :
▪ un appui continu sur ladite icône combiné à une translation de ladite icône/pictogramme de la zone graphique de visualisation vers la zone graphique d'acquisition et un relâchement de l'appui lorsque ladite icône est située dans la zone graphique d'acquisition ou
▪ par au moins un appui ponctuel sur ladite icône/pictogramme de la zone graphique de visualisation.

5. Procédé de programmation déportée d'un dispositif d'affichage (AFF1) d'une machine (1) pour préparation de boissons selon l'une des revendications 1 à 4, **caractérisé en ce que** le protocole de communication (com) est du WIFI ou du Bluetooth ou de la radiofréquence.

6. Produit programme d'ordinateur comprenant des instructions de code agencées pour mettre en oeuvre les étapes d'un procédé selon l'une des revendications 1 à 5, lorsque ledit produit programme est exécuté sur l'unité (U) de traitement électronique d'un terminal (TER), notamment un terminal (TER) de communication portable.

7. Terminal (TER) de communication portable comprenant une unité (U) de traitement électronique ayant en mémoire les instructions de code d'un produit programme d'ordinateur selon la revendication précédente et agencée pour exécuter un tel produit programme d'ordinateur.

## Patentansprüche

1. Verfahren zur Fernprogrammierung einer Anzeigevorrichtung (AFF1) einer Maschine (1) zur Zubereitung von Getränken durch ein Kommunikationsendgerät (TER), wobei das Kommunikationsendgerät (TER) mindestens eine Anzeigevorrichtung (AFF2) und eine elektronische Bearbeitungseinheit (U) umfasst, wobei die Maschine (1) zur Zubereitung von Getränken mindestens eine Steuerungseinheit (C) umfasst, die angeordnet ist, um mindestens eine Programmierungsanweisung (InsP) entsprechend einem Kommunikationsprotokoll (com) zu empfangen, wobei das Verfahren zur Fernprogrammierung die folgenden Schritte umfasst:
- (E1) Ausarbeitung in der Anzeigevorrichtung (AFF2) des Kommunikationsendgeräts (TER) mindestens einer Programmierungsanweisung (InsP), wobei die Ausarbeitung einen Teilschritt umfasst, bei dem die elektronische Bearbeitungseinheit (U) die Anzeigevorrichtung (AFF2) des Kommunikationsendgeräts (TER) programmiert, und die Programmierungsanweisung (InsP) mindestens ein Datum (D) zum Codieren mindestens einer Ikone (IC) umfasst, das in der Anzeigevorrichtung (AFF2) angezeigt wird, und
- (Es) Synchronisieren des Kommunikationsendgeräts (TER) mit der Steuerungseinheit (C) im Laufe dessen sich das Kommunikationsendgerät (TER) mit der Steuerungseinheit (C) paart, und die Maschine (1) das Endgerät über einen Programmierungsstatus der Anzeigevorrichtung (AFF1) und eine Organisation der Startseite informiert;
- Wählen durch einen Nutzer, die bereits in der Anzeigevorrichtung (AFF1) gespeicherten Parameter beizubehalten, oder die Anzeigevorrichtung (AFF1) anhand der Programmierungsanweisung (InsP) umzuprogrammieren, durch:
- (E2) Senden der Programmierungsanweisung (InsP) durch das Kommunikationsendgerät (TER) entsprechend dem Kommunikationsprotokoll (com) an die Steuerungseinheit (C), und durch:
- (E3) Programmieren durch die Steuerungseinheit (C) der Anzeigevorrichtung (AFF1) der Maschine (1) zur Zubereitung von Getränken, mit dem Datum (D) zum Codieren, das in der Programmierungsanweisung (InsP) enthalten ist, um mindestens die Ikone in der Anzeigevorrichtung (AFF1) anzuzeigen.

2. Verfahren zur Fernprogrammierung einer Anzeigevorrichtung (AFF1) einer Maschine (1) zur Zubereitung von Getränken nach Anspruch 1, wobei der Schritt (E3) des Programmierens der Anzeigevorrichtung (AFF1) durch die Steuerungseinheit (C) das Ersetzen mindestens einer zuvor in der Anzeigevorrichtung (AFF1) der Maschine (1) zur Zubereitung von Getränken angezeigten Ikone durch mindestens eine aus der mindestens einen Programmierungsanweisung (InsP) stammende Ikone (IC) umfasst, die in der Anzeigevorrichtung (AFF2) des Kommunikationsendgeräts (TER) ausgearbeitet wird.

3. Verfahren zur Fernprogrammierung einer Anzeigevorrichtung (AFF1) einer Maschine (1) zur Zubereitung von Getränken nach einem der Ansprüche 1 oder 2, **dadurch gekennzeichnet, dass** Schritt (E3) zum Programmieren der Anzeigevorrichtung (AFF1) durch die Steuerungseinheit (C) mindestens einen der folgenden Schritte umfasst:
- (E3') Programmieren durch die Steuerungseinheit (C) von mindestens zwei Grafikmatrizes (M) in der Anzeigevorrichtung (AFF1), um mehrere Ikonen in der Anzeigevorrichtung (AFF1) anzeigen zu können, und
- (E3") dynamisches Zuordnen einer Grafikmatrix zu jeder Ikone durch die Steuerungseinheit (C), und
- (E3‴) Verknüpfen durch die Steuerungseinheit (C) mindestens einer Steuerungsanweisung (InsC) mindestens eines Funktionselements (F) der Maschine (1) zur Zubereitung von Getränken, wobei die Steuerungsanweisung (InsC) mit einer Grafikmatrix (M) und einem Datum (D) zum Codieren verknüpft ist.

4. Verfahren zur Fernprogrammierung einer Anzeigevorrichtung (AFF1) einer Maschine (1) zur Zubereitung von Getränken nach einem der Ansprüche 1 bis 3, **dadurch gekennzeichnet, dass** der Schritt (E1) zum Ausarbeiten der Programmierungsanweisung (InsP) einen Teilschritt umfasst, bei dem die elektronische Bearbeitungseinheit (U) angepasst ist, um die Anzeigevorrichtung (AFF2) des Kommunikationsendgeräts (TER) derart zu programmieren, um Folgendes aufzuweisen:
- mindestens einen grafischen Visualisierungsbereich (Zv) mindestens einer Ikone, die mit mindestens einer Anzeigeanweisung der Ikone in dem grafischen Visualisierungsbereich verknüpft ist, wobei jede im grafischen Visualisierungsbereich (Zv) angezeigte Ikone Codierungsdaten (D) entspricht, und
- einen grafischen Erfassungsbereich (Za), der vorgesehen ist, um die Programmierungsanweisung (InsP) aus mindestens einer aus dem grafischen Visualisierungsbereich in den grafischen Erfassungsbereich des Kommunikationsendgeräts übertragenen Ikone auszuarbeiten, wobei die Übertragung der Ikone zwischen den Bereichen durchgeführt wird, durch:
◆ kontinuierliches Drücken auf die Ikone in Verbindung mit einer Verschiebung der Ikone/des Piktogramms aus dem grafischen Visualisierungsbereich in den grafischen Erfassungsbereich, und Beenden des Drückens, wenn sich die Ikone im grafischen Erfassungsbereich befindet, oder
◆ durch mindestens einmaliges Drücken auf die Ikone/das Piktogramm des grafischen Visualisierungsbereichs.

5. Verfahren zur Fernprogrammierung einer Anzeigevorrichtung (AFF1) einer Maschine (1) zur Zubereitung von Getränken nach einem der Ansprüche 1 bis 4, **dadurch gekennzeichnet, dass** das Kommunikationsprotokoll (com) WIFI oder Bluetooth oder Radiofrequenz ist.

6. Computerprogrammprodukt, welches Codeanweisungen umfasst, die angeordnet sind, um die Schritte eines Verfahrens nach einem der Ansprüche 1 bis 5 umzusetzen, wenn das Programmprodukt in der elektronischen Bearbeitungseinheit (U) eines Endgerätes (TER), insbesondere eines tragbaren Kommunikationsendgerätes (TER) ausgeführt wird.

7. Tragbares Kommunikationsendgerät (TER), umfassend eine elektronische Bearbeitungseinheit (U), welche im Speicher Codeanweisungen eines Computerprogrammprodukts nach dem vorstehenden Anspruch aufweist, und angeordnet ist, um ein solches Computerprogrammprodukt auszuführen.

## Claims

1. A method for remote programming of a display device (AFF1) of a beverage preparation machine (1) by a communication terminal (TER), said communication terminal (TER) comprising at least one display device (AFF2) and an electronic processing unit (U), said beverage preparation machine (1) comprising at least one control entity (C) arranged to receive at least one programming instruction (InsP) according to a communication protocol (com), the remote programming method comprising the following steps :
- (E1) development on the display device (AFF2) of the communication terminal (TER) of at least one programming instruction (InsP), said development comprising a sub-step in which the electronic processing unit (U) programs the display device (AFF2) of the communication terminal (TER), and said programming instruction (InsP) comprising at least one coding data (D) of at least one icon (IC) displayed on said display device (AFF2), and
- (Es) synchronization of the communication terminal (TER) with the control entity (C) during which the communication terminal (TER) is paired with the control entity (C) and the machine (1) informs the terminal about a programming status of the display device (AFF1) and an organization of the home screens;
- selection by a user to keep the parameters already stored in the display device (AFF1) or to reprogram the display device (AFF1) by means of the programming instruction (InsP) by:
- (E2) sending of said programming instruction (InsP) by the communication terminal (TER), according to the communication protocol (com), to the control entity (C) and by:
- (E3) programming, by the control entity (C), of the display device (AFF1) of the beverage preparation machine (1), with the coding data (D) contained in the programming instruction (InsP) so as to at least display the icon on said display device (AFF1).

2. The method for remote programming of a display device (AFF1) of a beverage preparation machine (1) according to claim 1, wherein the step (E3) of programming by the control entity (C) the display device (AFF1) comprises the substitution of at least one icon previously displayed on the display device (AFF1) of the beverage preparation machine (1) by the at least one icon (IC) derived from the at least one programming instruction (InsP) developed on the display device (AFF2) of the communication terminal (TER).

3. The method for remote programming of a display device (AFF1) of a beverage preparation machine (1) according to any of claims 1 or 2, **characterized in that** the step (E3) of programming by the control entity (C) the display device (AFF1) comprises at least one of the following steps:
- (E3') programming by the control entity (C) of at least two graphic matrices (M) on the display device (AFF1) so as to be able to display several icons on the display device (AFF1) and
- (E3") dynamic allocation by the control entity (C) of a graphic matrix to each icon and
- (E3‴) association by the control entity (C) of at least one control instruction (InsC) of at least one functional element (F) of the beverage preparation machine (1), said control instruction (InsC) being associated with a graphic matrix (M) and with a coding data (D).

4. The method for remote programming of a display device (AFF1) of a beverage preparation machine (1) according to any of claims 1 to 3, **characterized in that** the step (E1) of develoing the programming instruction (InsP) comprises a sub-step in which the electronic processing unit (U) is adapted to program the display device (AFF2) of the communication terminal (TER) so as to have:
- At least one graphic viewing area (Zv) of at least one icon associated with at least one instruction for displaying the icon in said graphic viewing area, each icon displayed in the graphic viewing area (Zv) corresponding to coding data (D), and
- A graphic acquisition area (Za) which is provided to develop the programming instruction (InsP) from at least one icon transferred from the graphic viewing area to said graphic acquisition area of the communication terminal, the transfer of the icon between the areas is performed by:
▪ a continuous press on said icon combined with a translation of said icon/pictogram from the graphic viewing area to the graphic acquisition area and a release of the press when said icon is located in the graphic acquisition area or
▪ at least one point press on said icon/pictogram of the graphic viewing area.

5. The method for remote programming of a display device (AFF1) of a beverage preparation machine (1) according to any of claims 1 to 4, **characterized in that** the communication protocol (com) is WIFI or Bluetooth or radio frequency.

6. A computer program product comprising code instructions arranged to implement the steps of a method according to any of claims 1 to 5, when said program product is executed on the electronic processing unit (U) of a terminal (TER), in particular a portable communication terminal (TER).

7. A portable communication terminal (TER) comprising an electronic processing unit (U) having in memory the code instructions of a computer program product according to the preceding claim and arranged to execute such a computer program product.
